# EUROPEAN PATENT SPECIFICATION

(11) **EP 3 754 815 B1**
(45) Date of publication and mention of the grant of the patent: **05.06.2024**
(21) Application number: 19754940.5
(22) Date of filing: 10.01.2019
(51) Int. Cl.: F16K 27/00, F16K 31/04, H02K 5/128, H02K 21/14

(54) **ELECTRIC VALVE PROVIDED WITH A STATOR UNIT**
ELEKTRISCHES VENTIL MIT EINER STATOREINHEIT
VANNE ÉLECTRIQUE ÉQUIPÉE D'UNE UNITÉ DE STATOR

(30) Priority: 16.02.2018 JP 2018026029
(43) Date of publication of application: 23.12.2020
(73) Proprietor: Fujikoki Corporation, Tokyo 158-0082 (JP)
(72) Inventor: HOJO Takashi, Tokyo 158-0082 (JP); ASANO Teppei, Tokyo 158-0082 (JP); HARADA Takao, Tokyo 158-0082 (JP)
(74) Representative: Ter Meer Steinmeister & Partner
(86) International application number: PCT/JP2019/000588
(87) International publication number: WO 2019/159573

(56) References cited:
- JP-A- 2012 124 987
- JP-A- 2012 124 987
- JP-A- 2014 111 956
- JP-A- 2014 217 149
- US-A1- 2001 002 546

## Description

### Technical Field

The present disclosure relates to a stator unit, in particular, a casting-type stator unit in which resin having low hardness, such as a urethane resin, is used as a mold resin, and to a motor-driven valve including the same.

### Background Art

An exemplary conventional stator unit along with a motor-driven valve using the same is illustrated in Fig. 9, and the configuration will be briefly described (see Patent Literature 1 for the structure in detail).

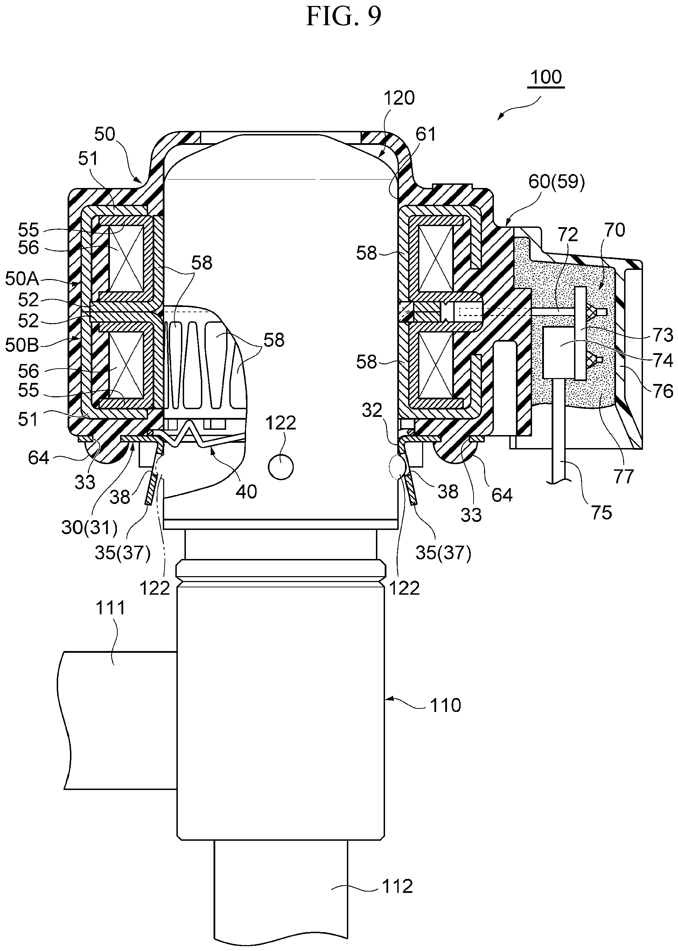

In a motor-driven valve 100 as a conventional example illustrated in Fig. 9, a lower end portion of a cylindrical can 120 with a ceiling portion is hermetically joined, through welding or the like, to a valve body 110 having a pipe joint 111 as a lateral inlet/outlet and a pipe joint 112 as a downward inlet/outlet. A rotor (not shown) is disposed on the inner periphery of the can 120 with a predetermined gap therebetween, and a stator unit 50 is externally and securely fitted to the can 120 so as to rotary drive the rotor. The rotor and the stator unit 50 constitute a stepping motor.

The stator unit 50 includes stator coils 50A and 50B in two phases (phase A and phase B). The stator coil 50A on an upper stage has a pair of upper and lower yokes 51 and 52, a bobbin 55 attached to the yokes 51 and 52, a coil 56 wound around the bobbin 55, and the like. Meanwhile, the stator coil 50B on a lower stage, which is configured in such a manner as being vertically inverted from the configuration of the stator coil 50A on the upper stage, has the pair of upper and lower yokes 52 and 51, the bobbin 55 attached to the yokes 52 and 51, the coil 56 wound around the bobbin 55, and the like.

The yokes 51 and 52 are made of magnetic material as raw material, and the inner periphery side of each of the yokes 51 and 52 is provided with elongated claw-shaped or isosceles triangular magnetic-pole teeth 58 at a predetermined angular interval (for example, at an interval of 30°).

The stator unit 50 is molded using a thermoplastic resin, such as an ABS resin, as a mold resin 59.

In molding the stator unit 50 including the stator coils 50A and 50B configured as such, the stator coils 50A and 50B that are stacked are set in a mold for molding. The mold for molding includes, for example, a lower die in which the stacked stator coils 50A and 50B are to be placed, a core for forming a fit-insertion hole 61 into which the can 120 is to be fit-inserted, and an upper die to cover the lower die so as to form a hermetically sealed space in cooperation with the lower die and the core.

When the stator coils 50A and 50B are set inside the mold configured as such and a thermoplastic resin as the mold resin 59 is melted and then injected into the mold, the outer periphery of the stator coils 50A and 50B is covered with and their internal gaps are filled with the mold resin 59. Then, when the mold resin 59 is hardened, the outer side of the stator coils 50A and 50B (the outer periphery and upper and lower portions thereof) is sealed.

One side of a stator body 60, which includes the portions covered and filled with the mold resin 59 and sealed, is provided with a lead wire connecting portion 70. The lead wire connecting portion 70 is provided with a base 73 and a connector 74 for connecting a plurality of coil terminal pins 72 and a plurality of lead wires 75, and has attached thereto a cover 76 that covers the upper portion of the coil terminal pins 72, base 73, connector 74, lead wires 75, and the like, the inside of the cover 76 being filled with a resin 77 of a silicone resin, an epoxy resin, or the like, and sealed.

Meanwhile, on the underside of the mold resin 59 of the stator body 60, a ring-like rotation-stopping member 30 is securely attached so as to prevent the relative rotation and relative movement among the stator unit 50, the can 120, and the valve body 110.

Specifically, the rotation-stopping member 30, which is produced through die-cutting and press working of a conductive metal plate, such as SUS, includes an annular flat plate portion 31 with an opening 32 through which the can 120 can be inserted. On the underside of the mold resin 59 of the stator body 60, a plurality of bar-like portions projecting downward is provided, and the annular flat plate portion 31 has round holes 33 through which the bar-like portions can be inserted.

Securely attaching the rotation-stopping member 30 to the stator unit 50 is performed such that the bar-like portions are inserted through the round holes 33 and melted through ultrasonic welding or the like, and then crushed (bar-like portions 64 in a crushed state).

Further, on the side of the opening 32 (the inner periphery side) of the annular flat plate portion 31 of the rotation-stopping member 30, a plurality of engagement plate portions 35, each having an inverted L-shape, is cut and raised, engagement pieces 37 facing downward of the engagement plate portions 35 each have a round or elongated hole-shaped engagement hole 38 formed therein, and the can 120 has semispherical projections 122 formed in its circumferential direction, each semispherical projection 122 being fitted into the engagement hole 38.

Therefore, the rotation-stopping member 30 is securely attached to the stator unit 50 in the aforementioned manner, the stator unit 50 is externally fitted to the can 120, and the projections 122 formed in the can 120 are fitted into their respective engagement holes 38 formed in the engagement pieces 37 facing downward of the engagement plate portions 35, so that the engagement pieces 37 are outwardly distorted to allow, with their spring force, the projections 122 to firmly fit into the engagement holes 38. Thus, the stator unit 50 is externally and securely fitted to the can 120, so that their relative rotation and relative movement are prevented.

Further, in this motor-driven valve 100, to prevent undesirable discharge that may be generated between the yokes 51 and 52, and the can 120, a conducting spring 40 having conductivity is interposed between the magnetic-pole teeth 58 of the yoke 51 positioned at the lowest and the rotation-stopping member 30. With this, the rotation-stopping member 30, the can 120, and the valve body 110 are electrically connected with the projections 122 fitted into the engagement holes 38, so that the yokes 51 and 52, the can 120, and the valve body 110 are electrically connected via the conducting spring 40 and the rotation-stopping member 30. Thus, even when high-voltage noise is applied to the stator coils 50A and 50B, the yokes 51 and 52 and the can 120 are at the same potential, which can prevent undesirable discharge that may be generated between the yokes 51 and 52, and the can 120, thereby enabling to reduce adverse effects on the peripheral circuits.

It should be noted that as the rotation-stopping member, instead of the ring-like one that is externally fitted to the can 120 as described above, a bifurcated one as shown in Patent Literature 2, for example, is also known, which is attached to one side of the stator body, having a pair of circular sandwiching portions adapted to sandwich a pipe joint as a lateral inlet/outlet so as to prevent the relative rotation and relative movement between the stator unit 50 and the can 120.

In addition, as a member for electrically connecting the yoke and the valve body, instead of a conducting spring as described above, ring-like or pintype ones and the like as shown in Patent Literature 2, for example, are also known.

JP 2012 124987 A discloses a stator for an motor-operated valve and a motor-operated valve using the same, wherein the stator is mounted on a motor-operated valve main body. The motor-operated valve main body includes: a valve main body that has a valve seat and a valve chest; fluid inlet/outlet pipes that are provided in the valve main body; a valve that is rotary driven by a rotor that is provided rotatably in the valve main body; and a can that is provided in the valve main body so as to cover the rotor and the valve. The stator includes: a resin mold portion that covers a yoke and coils; an opening that is provided on a bottom surface of the resin mold portion so as to expose a portion of a lower surface of the yoke; and a detent member that has a convex portion that is in contact with the yoke through the opening, and an engagement portion that is engaged with one of the fluid inlet/outlet pipes. The detent member is mounted on the resin mold portion, and then fixed to the resin mold portion in such a manner that a perimeter of the convex portion is intimate contact with an entire circumference of the opening.

US 2001/002546 A1 discloses a motor shaft for a rotational-two-direct motion converting motor, which has a rotation stopping portion formed in a plate shape, and a screw portion formed in a columnar shape. In addition, the motor shaft has a hole, arranged in an end portion of the motor shaft in a longitudinal direction of the motor shaft, for positioning the motor shaft in a form rolling. Therefore, the position shift or a phase shift of thread ridges formed on the screw portion can be prevented.

### Citation List

### Patent Literature

Patent Literature 1: JP 2016-14453 A
Patent Literature 2: JP 2004-353679 A

### Summary of Invention

### Technical Problem

In the aforementioned conventional stator unit 50, a thermoplastic resin, such as an ABS resin, is used as the mold resin 59 to produce the stator body 60 through injection molding. However, a thermoplastic resin, such as an ABS resin, for use in molding becomes relatively solid when hardened, and thus, is inflexible to thermal deformation due to varying temperature, thereby likely causing cracks, distortion, and the like. Therefore, the improvement in the durability, product life, and the like has been sought.

Thus, as a major trend in recent years, a thermosetting resin having low hardness, such as a urethane resin, has been used as the mold resin.

However, when a thermosetting resin having low hardness, such as a urethane resin, is used as the mold resin, the bar-like portions 64 or the like for fixing the rotation-stopping member 30 to the stator body 60 become fragile, which likely leads to improper positioning of the stator coils 50A and 50B as well as fails to firmly fix the rotation-stopping member 30 to the stator body 60. Further, since the mold resin is a thermosetting resin, a fixation method through the post-process, such as ultrasonic welding or thermal swaging, cannot be adopted.

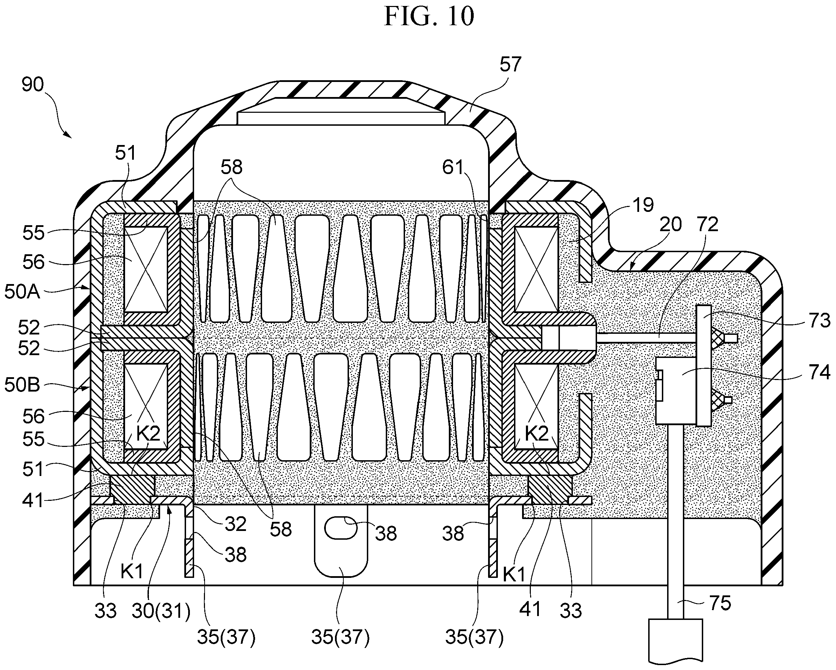

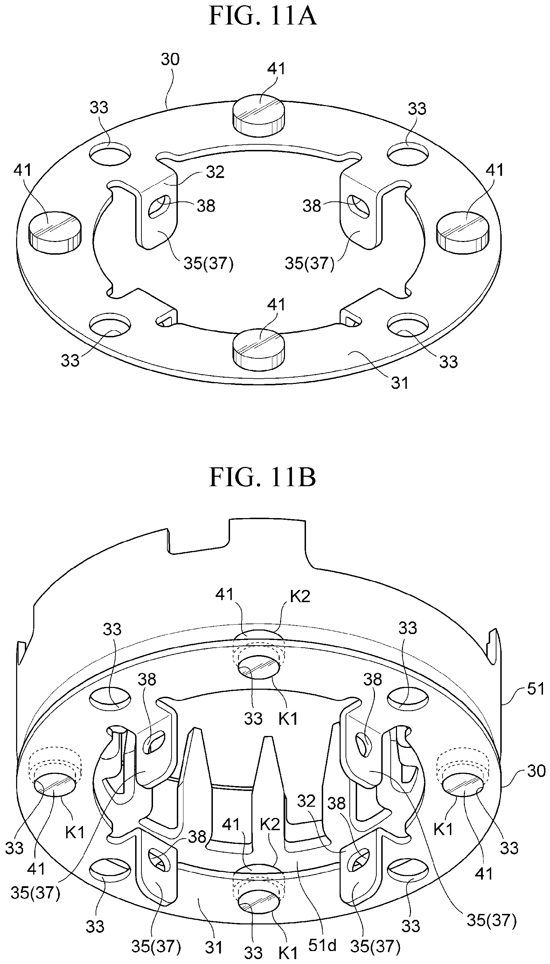

Thus, to solve the foregoing, the configuration of a stator unit as illustrated in Fig. 10 and Figs. 11A and 11B has already been adopted. It should be noted that portions illustrated in Fig. 10 and Figs. 11A and 11B are denoted by the same reference numerals as those denoting the respective portions of the stator unit 50 illustrated in Fig. 9.

In a stator unit 90 illustrated as an example in Fig. 10 and Figs. 11A and 11B, the mold resin 59 of the stator unit 50 and the resin 77 of the lead wire connecting portion 70 illustrated in Fig. 9 are formed as a mold resin 19 made of a thermosetting resin having low hardness, such as a urethane resin, and a portion sealed with the mold resin 19 is formed as a stator body 20. The outer periphery surface of the stator body 20, except for its underside, is covered with a cover 57 made of a thermoplastic resin, such as an ABS.

In a lower portion of the mold resin 19 of the stator body 20, the rotation-stopping member 30 with seatings 41 attached thereto is disposed, each seating 41 in a stepped short columnar shape being made of conductive metal, such as SUS. The rotation-stopping member 30 with the seatings 41 has substantially the same configuration as that of the rotation-stopping member 30 illustrated in Fig. 9, except for the seatings 41.

That is, the annular flat plate portion 31 of the rotation-stopping member 30 has a plurality of round holes 33 (eight round holes formed at an interval of 45° in the illustrated example), and a small-diameter portion of each seating 41 in a stepped short columnar shape is fitted into and joined through welding to each round hole 33 (each of every other round holes 33 of eight round holes 33 (at an interval of 90°), that is, four round holes 33 in the illustrated example) (a welded portion K1), prior to the assembling of the stator coils 50A and 50B.

Further, in the rotation-stopping member 30 having the seatings 41 attached thereto through welding, the upper face of each seating 41 is joined to the underside of the yoke 51 positioned at the lowest through resistance welding (a welded portion K2), prior to the assembling of the stator coils 50A and 50B.

In this manner, after the rotation-stopping member 30 with the seatings 41 is joined to the yoke 51, the stator coils 50A and 50B are assembled, the assembled stator coils 50A and 50B are vertically stacked and set inside a mold in which the cover 57 is placed in advance, and a thermosetting resin having low hardness, such as a urethane resin, as the mold resin, is injected into the mold through vacuum casting and then hardened in a drying furnace. Then, the stator coils 50A and 50B are demolded, and the stator unit 90 is obtained, in which portions including the surroundings of the seatings 41 of the rotation-stopping member 30 are covered and filled with the mold resin 19 of a thermosetting resin having low hardness, such as a urethane resin, and sealed.

As described above, with the use of the rotation-stopping member 30 with the metal seatings 41, the rotation-stopping member 30 can be fixed to the stator body 20, and positioning of the stator coils 50A and 50B can also be relatively properly performed.

Further, since the seatings 41 are made of conductive metal, such as SUS, similarly to the conducting spring 40 of the stator unit 50 illustrated in Fig. 9, the yokes 51 and 52, the can 120, and the valve body 110 are electrically connected via the seatings 41 and the rotation-stopping member 30. Thus, even when high-voltage noise is applied to the stator coils 50A and 50B, the yokes 51 and 52 and the can 120 are at the same potential, which can prevent undesirable discharge that may be generated between the yokes 51 and 52, and the can 120, thereby enabling to reduce adverse effects on the peripheral circuits.

However, the aforementioned conventional stator unit 90 requires the seatings 41 to be attached to the rotation-stopping member 30, and joining through welding of the seatings 41 and the rotation-stopping member 30 and of the seatings 41 and the yoke 51. This increases the number of components, and the man-hours of assembling due to the necessity of separate welding of the seatings 41 and the rotation-stopping member 30 and of the seatings 41 and the yoke 51. In addition, since the contact area between the seatings 41, each having a short columnar shape, and the yoke 51 increases at the time of welding, the resistance welding is difficult to be performed, and sufficient strength of the welded portions may not be secured. Further, in joining through welding of the seatings 41 and the rotation-stopping member 30, there is a concern that the clearance between the yoke and the rotation-stopping member, that is, the positional relations among the stator coils 50A and 50B, the can, the rotor, and the like may vary. Furthermore, there is also another concern such as an increase in parts cost due to the necessity of producing the seatings 41 through cutting.

The present disclosure has been made in view of the aforementioned circumstances, and provides a stator unit capable of reducing the number of components and man-hours of assembling so as to suppress the parts cost and production cost, and a motor-driven valve including the same.

### Solution to Problem

In view of the foregoing, a motor-driven valve according to the present disclosure is characterized by the features of claim 1.

In an aspect, the rotation-stopping member may be embedded in the mold resin such that the engagement piece partially or entirely projects from the mold resin.

In another aspect, the engagement piece may be provided in the engagement plate portion that is bent from the inner periphery side of the base plate portion in the direction opposite to the side of the yoke.

According to the present invention, the projecting piece is cut and raised from a portion between the inner periphery and the outer periphery of the base plate portion upward toward the underside of the yoke.

In still yet another aspect, three or more engagement pieces may be provided at an equiangular interval in a circumferential direction and three or more projecting pieces may be provided likewise.

In yet a further aspect, a urethane resin, a silicone resin, or an epoxy resin may be used as the mold resin.

In another aspect, the rotation-stopping member may be made of a conductive metal plate.

### Advantageous Effects of Invention

In the stator unit according to the present disclosure, since the rotation-stopping member is provided with the projecting piece that is bent and raised toward the side of the yoke, and the projecting piece is joined through welding to the yoke, the rotation-stopping member can be firmly fixed to the stator body, and positioning of the stator coil can also be relatively properly performed.

Further, the rotation-stopping member with the projecting pieces can be formed as a single component through, for example, die-cutting and press working, and thus can significantly reduce the number of components and also the number of welded portions (the number of times of welding) by half, so that parts cost and production cost can be reduced, as compared to the stator units as in the aforementioned conventional examples that use the rotation-stopping member with separate seatings. In addition, since the contact area between the projecting pieces and the yoke at the time of welding is reduced, resistance welding is facilitated, so that sufficient strength of the welded portions can be secured. Furthermore, advantageous effects can be obtained that variations in the clearance between the yoke and the rotation-stopping member, that is, those in the positional relations among the stator coil, the can, the rotor, and the like can be reduced.

### Brief Description of Drawings

Fig. 1 is a plan view of an embodiment of a stator unit according to the present disclosure;
Fig. 2 is a cross-sectional view of Fig. 1 taken along arrow A-A;
Fig. 3 is a cross-sectional view of Fig. 1 taken along arrow B-B;
Fig. 4 is an upper perspective view of a rotation-stopping member for use in the stator unit illustrated in Fig. 1 to Fig. 3;
Fig. 5 is a lower perspective view of a yoke and the rotation-stopping member joined through welding to the yoke illustrated in Fig. 2 and Fig. 3;
Fig. 6 is an underside view of Fig. 5;
Fig. 7 is a right-side view of Fig. 5 (a reversed view of Fig. 6 taken along arrow C);
Fig. 8 is a cross-sectional view of Fig. 5 taken along arrow D1-D1 (a reversed cross-sectional view of Fig. 6 taken along arrow D2-D2);
Fig. 9 is a partially cutaway front view of an example of a motor-driven valve with a conventional stator unit;
Fig. 10 is an overall longitudinal cross-sectional view of another example of the conventional stator unit;
Fig. 11A is an upper perspective view of a rotation-stopping member illustrated in Fig. 10; and
Fig. 11B is a lower perspective view of a yoke and the rotation-stopping member joined through welding to the yoke illustrated in Fig. 10.

### Description of Embodiments

An embodiment of the present disclosure will be described below with reference to the drawings.

It should be noted that some of the gaps formed between the members, clearances between the members, and the like illustrated in the drawings may be exaggerated for easier understanding of the disclosure and for convenience in the preparation of the drawings. Further, descriptions indicating positions and directions such as up, down, left, and right in the present specification are based on the drawings, and do not indicate the positions and directions in the actual use.

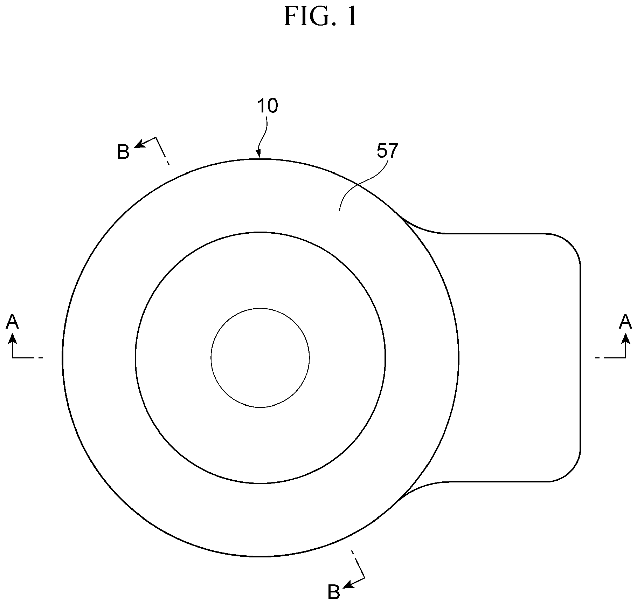

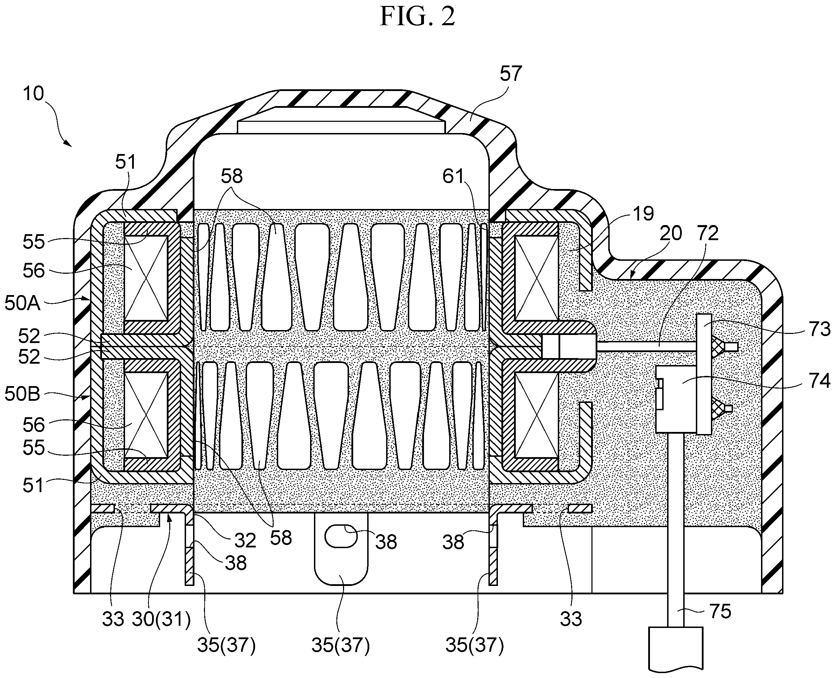

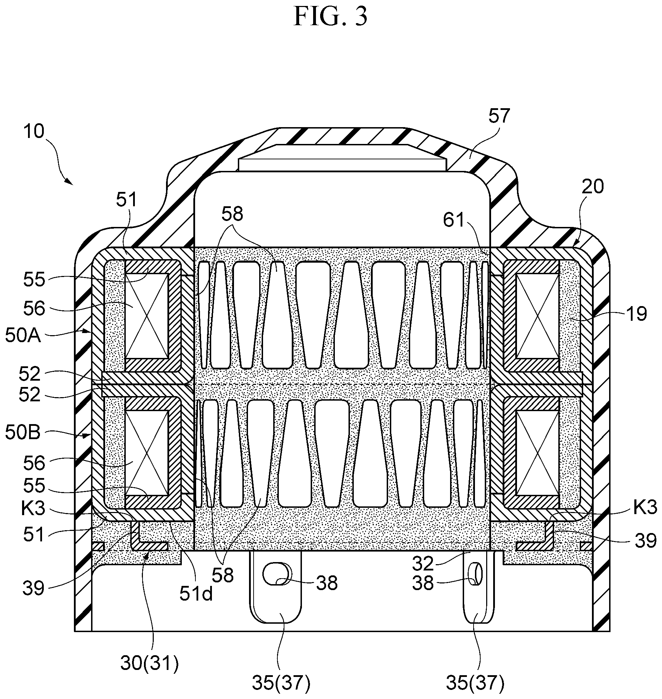

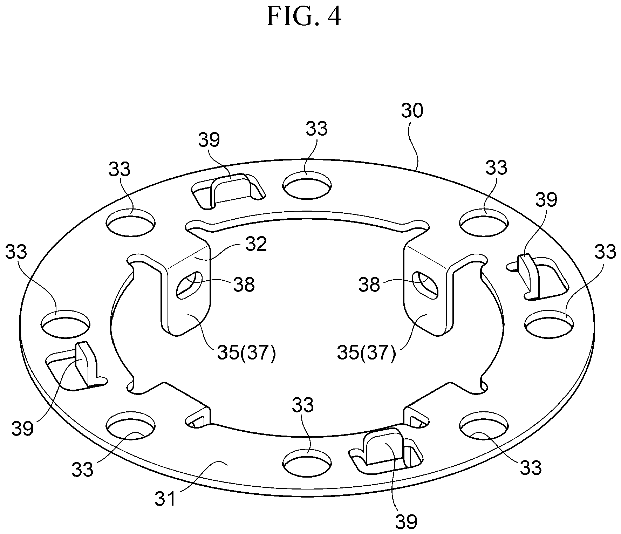

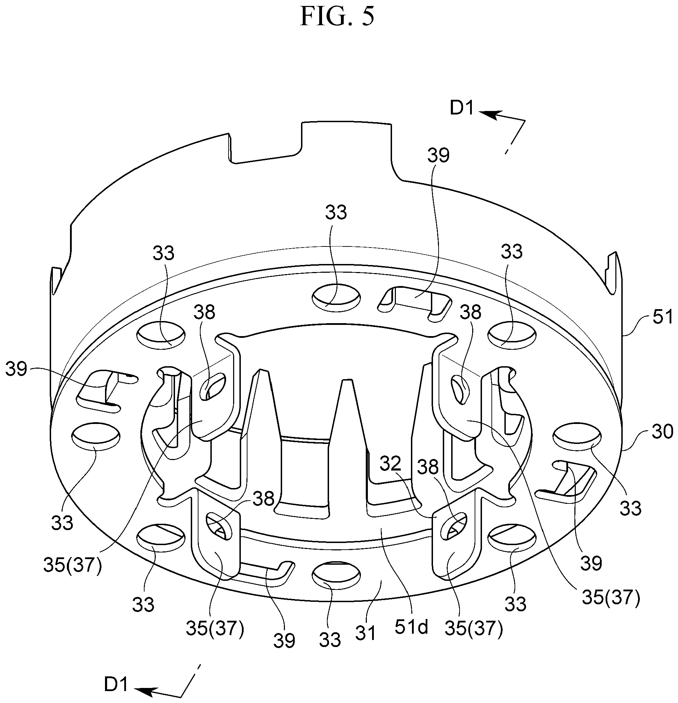

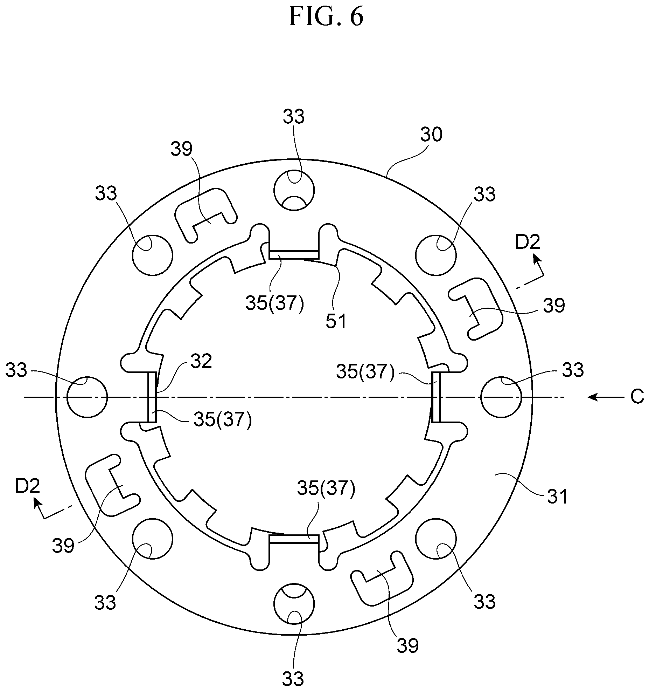

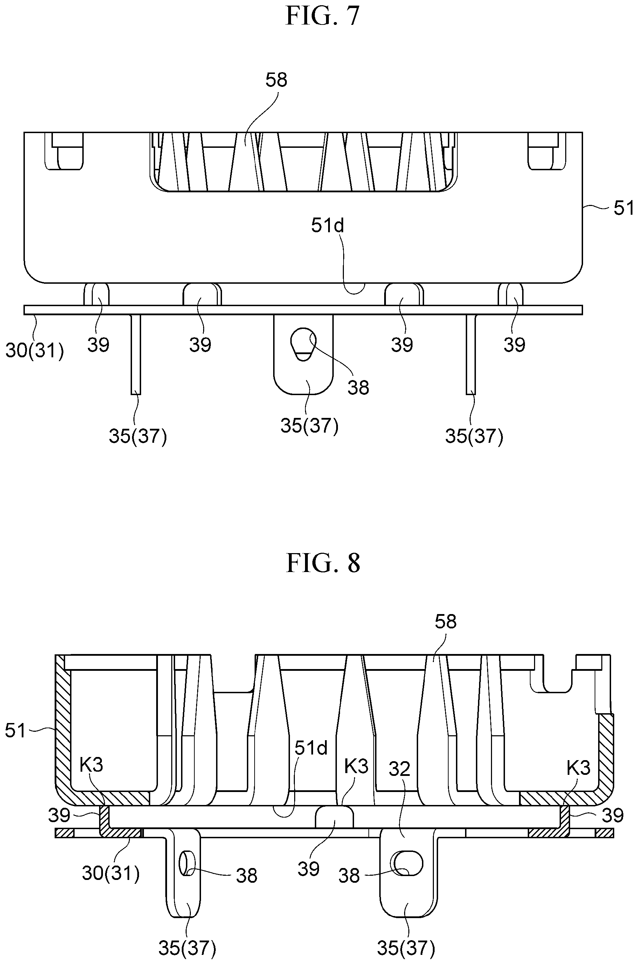

Fig. 1 is a plan view of an embodiment of a stator unit according to the present disclosure, Fig. 2 and Fig. 3 are cross-sectional views of Fig. 1 taken along arrow A-A and arrow B-B, respectively, Fig. 4 is an upper perspective view of a rotation-stopping member for use in the stator unit illustrated in Fig. 1 to Fig. 3, Fig. 5 is a lower perspective view of a yoke and the rotation-stopping member joined through welding to the yoke illustrated in Fig. 2 and Fig. 3, and Fig. 6 to Fig. 8 are respectively an underside view, a right-side view (a reversed view of Fig. 6 taken along arrow C), and a cross-sectional view taken along arrow D1-D1 (a reversed cross-sectional view of Fig. 6 taken along arrow D2-D2) of Fig. 5.

It should be noted that portions illustrated in Fig. 1 to Fig. 8 are denoted by the same reference numerals as those denoting the respective portions of the conventional stator units 50 and 90 illustrated in Fig. 9 to Figs. 11A and 11B, and the overlapping descriptions are omitted. The following description is provided emphasizing the differences.

Similarly to the stator units 50 and 90 as the conventional examples, a stator unit 10 of the present embodiment is externally and securely fitted to the can 120 that is securely attached to the valve body 110 of the motor-driven valve 100 as illustrated in Fig. 9, and constitutes a stepping motor, together with a rotor (not shown) disposed inside the can 120.

Similarly to the stator unit 90 illustrated in Fig. 10, the stator unit 10 of the present embodiment includes the mold resin 19 made of a thermosetting resin having low hardness, such as a urethane resin, and a portion sealed with the mold resin 19 is formed as the stator body 20 (see Fig. 2 and Fig. 3). The outer periphery surface of the stator body 20, except for its underside, is covered with the cover 57 made of a thermoplastic resin, such as an ABS.

A lower portion of the mold resin 19 of the stator body 20 is provided with the rotation-stopping member 30 made of a conductive metal plate so as to be embedded in the mold resin 19 such that the engagement pieces 37 facing downward of the engagement plate portions 35 provided on the inner periphery side each project partially or entirely from the mold resin 19. This rotation-stopping member 30 has substantially the same basic configuration as that of the rotation-stopping member 30 illustrated in Fig. 9 to Figs. 11A and 11B.

That is, the rotation-stopping member 30, which is produced through die-cutting and press working of a conductive metal plate, such as SUS, includes the annular flat plate portion (the annular base plate portion) 31 with the opening 32 through which the can 120 can be inserted, the annular flat plate portion 31 having eight round holes 33 in total formed at an interval of 45°.

On the side of the opening 32 (the inner periphery side) of the annular flat plate portion 31 of the rotation-stopping member 30, four engagement plate portions 35, each having an inverted L shape, are cut and raised (formed by bending) at an interval of 90°, and the engagement pieces 37 facing downward (in a direction opposite to the side of the adjacent yoke 51) of the engagement plate portions 35 each have formed therein a round or elongated hole-shaped engagement hole 38.

Further, of the eight round holes 33 in total formed at an interval of 45°, between the adjacent round holes (33-33) of each of four sets of those, four rectangular projecting pieces 39 are each substantially perpendicularly cut and raised from the annular flat plate portion 31 facing upward (toward the side of the adjacent yoke 51). That is, herein, each projecting piece 39 is formed so as to be cut and raised upward from a portion between the inner periphery and the outer periphery (more specifically, a substantially center portion in the radial direction) of the annular flat plate portion 31.

In the rotation-stopping member 30 of the present embodiment, for example, the aforementioned eight round holes 33 and four engagement plate portions 35 are formed through die-cutting and press working, and the four projecting pieces 39 are formed through separate die-cutting and press working.

The upper end faces (the tip end portions) of the four projecting pieces 39, which have an identical shape and are bent and raised upward from the annular flat plate portion 31, abut and are joined, through resistance welding, to an underside (an annular flat surface portion) 51d of the yoke 51 positioned at the lowest (a welded portion K3), prior to the assembling of the stator coils 50A and 50B. This joining through welding is performed such that the positioning of the rotation-stopping member 30 relative to the underside (the annular flat surface portion) 51d of the yoke 51 in the vertical and circumferential directions is performed using jigs or the like, so as to properly set the relative positional relation between the yoke 51 and the rotation-stopping member 30.

In this manner, after the four projecting pieces 39 provided in the rotation-stopping member 30 are joined through welding to the underside 51d of the yoke 51, the stator coils 50A and 50B are assembled, the assembled stator coils 50A and 50B are vertically stacked and set inside a mold in which the cover 57 is placed in advance, and a thermosetting resin having low hardness, such as a urethane resin, as the mold resin, is injected into the mold through vacuum casting and then hardened in a drying furnace. Then, the stator coils 50A and 50B are demolded, and the stator unit 10 is obtained, in which portions including the surroundings of the projecting pieces 39 of the rotation-stopping member 30 are covered and filled with the mold resin 19 of a thermosetting resin having low hardness, such as a urethane resin, and sealed.

The stator unit 10 obtained as such is externally fitted to the can 120, and four projections 122 formed in the can 120 are fitted into their respective engagement holes 38 formed in the engagement pieces 37 facing downward of the four engagement plate portions 35, so that the engagement pieces 37 are outwardly distorted to allow, with their spring force, the projections 122 to firmly fit into the engagement holes 38. Thus, the stator unit 10 is externally and securely fitted to the can 120, so that their relative rotation and relative movement are prevented.

In the stator unit 10 of the present embodiment configured as such, the four projecting pieces 39 that are bent and raised toward the side of the yoke 51 are provided in the rotation-stopping member 30 and are joined through welding to the yoke 51, and thus, the rotation-stopping member 30 can be firmly fixed to the stator body 20, and also, the positioning of the stator coils 50A and 50B can be relatively properly performed.

Further, the rotation-stopping member 30 with the projecting pieces 39 can be formed as a single component through, for example, die-cutting and press working, and thus can significantly reduce the number of components and also the number of welded portions (the number of times of welding) by half, so that parts cost and production cost can be reduced, as compared to the stator units as in the aforementioned conventional examples that use the rotation-stopping member 30 with the separate seatings 41. In addition, since the contact area between the projecting pieces 39 and the yoke 51 at the time of welding is reduced, resistance welding is facilitated, so that sufficient strength of the welded portions can be secured. Furthermore, advantageous effects can be obtained that variations in the clearance between the yoke 51 and the rotation-stopping member 30, that is, those in the positional relations among the stator coils 50A and 50B, the can 120, the rotor, and the like can be reduced.

In addition to the foregoing, the rotation-stopping member 30 including the four projecting pieces 39 is made of conductive metal, such as SUS, and thus, similarly to the stator units 50 and 90 illustrated in Fig. 9 to Figs. 11A and 11B, the yokes 51 and 52, the can 120, and the valve body 110 are electrically connected via the rotation-stopping member 30 including the four projecting pieces 39. Thus, even when high-voltage noise is applied to the stator coils 50A and 50B, the yokes 51 and 52 and the can 120 are at the same potential, which can prevent undesirable discharge that may be generated between the yokes 51 and 52, and the can 120, thereby enabling to reduce adverse effects on the peripheral circuits.

It should be noted that it is needless to mention that the configuration of the stator coil, the types of the mold resin, and the like are not limited to those in the aforementioned embodiment. For example, although a urethane resin is used as the mold resin in the aforementioned embodiment, a thermosetting resin, such as a silicone resin and an epoxy resin, may also be adopted. Further, it is obvious that the number, the shape, the aspect of the arrangement, etc. of the projecting pieces 39, engagement pieces 37, etc. that are formed in the annular flat plate portion (the annular base plate portion) 31 of the rotation-stopping member 30 may also be changed, as appropriate.

Moreover, the present disclosure may be applied not only to the ring-like rotation-stopping member such as the aforementioned rotation-stopping member 30 that is externally fitted to the can 120, but also to a bifurcated one, etc. as shown in Patent Literature 2, for example, which has a base plate portion and engagement pieces for stopping rotation (a pair of circular sandwiching portions) provided downward (facing in the direction opposite to the side of the yoke) from the base plate portion. In this case, the base plate portion disposed on the lower side of the yoke may be provided with projecting pieces that are bent and raised toward the side of the yoke from the base plate portion, and the tip end portions of the projecting pieces may be joined through welding to the underside of the yoke.

### Reference Signs List

- 10: Stator unit
- 19: Mold resin
- 20: Stator body
- 30: Rotation-stopping member
- 31: Annular flat plate portion (annular base plate portion)
- 32: Opening
- 33: Round hole
- 35: Engagement plate portion
- 37: Engagement piece
- 38: Engagement hole
- 39: Projecting piece
- 50A, 50B: Stator coil
- 51, 52: Yoke
- 51d: Annular flat surface portion
- 55: Bobbin
- 56: Coil
- 57: Cover
- 58: Magnetic-pole teeth
- 60: Stator body
- 61: Fit-insertion hole
- 100: Motor-driven valve
- 110: Valve body
- 120: Can
- 122: Projection
- K1 to K3: Welded portion

## Claims

1. A motor-driven valve comprising a stator unit (10), a can (120) and a valve body (110),
wherein the stator unit (10) is externally and securely fitted to the can (120) that is securely attached to the valve body,
the stator unit (10) comprising:
a stator body (20) including a stator coil (50A, 50B) having a yoke (51, 52), a bobbin (55) attached to the yoke (51, 52), and a coil (56) wound around the bobbin (55), an outer side of the stator coil (56) being sealed with a mold resin; and
a rotation-stopping member (30) disposed adjacent to the yoke (51, 52) on an underside of the stator body (20) to prevent the relative rotation and relative movement among the stator unit (10), the can (120) and the valve body (110),
wherein the rotation-stopping member (30) has an annular base plate portion (31) with an opening (32) through which the can (120) is inserted from the underside of the stator body (20), an engagement piece (37) for stopping rotation and for engaging with projections (122) formed in the can (120), the engagement piece (37) being provided extending from the base plate portion (31) downward in a direction opposite to an underside (51d) of the yoke (51, 52), and a projecting piece (39) that is bent and raised upward toward the underside (51d) of the yoke (51, 52) from the base plate portion (31),
**characterized in that**
a tip end portion of the projecting piece (39) is joined through welding to the yoke (51, 52), and the projecting piece (39) is cut and raised from a portion between an inner periphery and an outer periphery of the base plate portion (31) upward toward the underside (51d) of the yoke (51, 52).

2. The motor-driven valve according to claim 1, wherein the rotation-stopping member (30) is embedded in the mold resin such that the engagement piece (37) partially or entirely projects from the mold resin.

3. The motor-driven valve according to claim 1 or 2, wherein the engagement piece (37) is provided in an engagement plate portion (35) that is bent from an inner periphery side of the base plate portion (31) in the direction opposite to the underside (51d) of the yoke (51, 52).

4. The motor-driven valve according to any one of claims 1 to 3 comprising three or more engagement pieces provided at an equiangular interval in a circumferential direction and three or more projecting pieces provided likewise.

5. The motor-driven valve according to any one of claims 1 to 4, wherein a urethane resin, a silicone resin, or an epoxy resin is used as the mold resin.

6. The motor-driven valve according to any one of claims 1 to 5, wherein the rotation-stopping member (30) is made of a conductive metal plate.

## Patentansprüche

1. Motorbetriebenes Ventil, umfassend eine Statoreinheit (10), eine Dose (120) und einen Ventilkörper (110),
wobei die Statoreinheit (10) außen sicher an der Dose (120) befestigt ist, welche sicher an dem Ventilkörper angebracht ist,
und die Statoreinheit (10) umfasst:
einen Statorkörper (20), umfassend eine Statorspule (50A, 50B) mit einem Joch (51, 52), einem Spulenkern (55), der an dem Joch (51, 52) angebracht ist, und einer Spule (56), die um den Spulenkern (55) herum gefunden ist, wobei eine Außenseite der Statorspule (56) mit einem Gießharz versiegelt ist; und
ein Rotationsanschlagselement (30), welches benachbart zu dem Joch (51, 52) an einer Unterseite des Statorkörpers (20) angebracht ist, um die gegenseitige Rotation und die gegenseitige Bewegung zwischen der Statoreinheit (10), der Dose (120) und dem Ventilkörper (110) zu verhindern,
wobei das Rotationsanschlagselement (30) ein ringförmiges Basisplattenteil (31) mit einer Öffnung (32) umfasst, durch welche die Dose (120) von der Unterseite des Statorkörpers (20) her eingesetzt wird, ein Eingriffsstück (37) zum Anhalten der Rotation und zum Eingriff mit Vorsprüngen (122), die in der Dose (120) ausgebildet sind, wobei das Eingriffsstück (37) sich von dem Basisplattenteil (31) nach unten in einer Richtung entgegensetzt zu der Unterseite (51d) des Jochs (51, 52) erstreckt, und ein Vorsprungsstück (39), welches von dem Basisplattenteil (31) abgebogen ist und sich davon nach oben in Richtung der Unterseite (51d) des Jochs (51, 52) erstreckt,
**dadurch gekennzeichnet, dass** ein Endabschnitt des Vorsprungsstücks (39) durch Schweißen mit dem Joch (51, 52) verbunden ist,
und dass das Vorsprungsstück (39) aus einem Teil zwischen einem inneren Umfang und einem äußeren Umfang des Basisplattenteils (31) ausgeschnitten ist und sich nach oben in Richtung der Unterseite (51d) des Jochs (51, 52) erhebt.

2. Motorbetriebenes Ventil gemäß Anspruch 1, bei welchem das Rotationsanschlagselement (30) in das Gießharz derart eingebettet ist, dass das Eingriffsstück (37) teilweise oder vollständig aus dem Gießharz herausragt.

3. Motorbetriebenes Ventil gemäß Anspruch 1 oder 2, bei welchem das Eingriffsstück (37) in einem Eingriffsplattenteil (35) vorgesehen ist, welches von einer inneren Umfangsseite des Basisplattenteils (31) in der Richtung entgegengesetzt zur Unterseite (51d) des Jochs (51, 52) abgebogen ist.

4. Motorbetriebenes Ventil gemäß einem der Ansprüche 1 bis 3, umfassend drei oder mehr Eingriffsstücke, die in gleichen Winkelabständen in einer Umfangsrichtung angeordnet sind, wobei drei oder mehr Vorsprungsstücke in gleicher Weise vorgesehen sind.

5. Motorbetriebenes Ventil gemäß einem der Ansprüche 1 bis 4, bei welchem ein Urethanharz, ein Silikonharz oder ein Epoxidharz als Gießharz verwendet wird.

6. Motorbetriebenes Ventil gemäß einem der Ansprüche 1 bis 5, bei welchem das Rotationsanschlagselement (30) aus einer leitenden Metallplatte besteht.

## Revendications

1. Soupape entraînée par moteur comportant une unité de stator (10), un boîtier (120) et un corps de soupape (110),
dans laquelle l'unité de stator (10) est montée extérieurement et fermement sur le boîtier (120) qui est fermement fixé au corps de soupape,
l'unité de stator (10) comportant :
un corps de stator (20) incluant une bobine de stator (50A, 50B) ayant une culasse (51, 52), une armature (55) fixée à la culasse (51, 52) et une bobine (56) enroulée autour de l'armature (55), un côté extérieur de la bobine de stator (56) étant rendu étanche avec une résine de moulage ; et
un élément d'arrêt de rotation (30) disposé au voisinage de la culasse (51, 52) sur une face inférieure du corps de stator (20) pour empêcher la rotation relative et le mouvement relatif parmi l'unité de stator (10), le boîtier (120) et le corps de soupape (110),
dans laquelle l'élément d'arrêt de rotation (30) a une partie de plaque de base annulaire (31) avec une ouverture (32) à travers laquelle le boîtier (120) est inséré depuis la face inférieure du corps de stator (20), une pièce de prise (37) pour arrêter une rotation et pour venir en prise avec des saillies (122) formées dans le boîtier (120), la pièce de prise (37) étant agencée en s'étendant à partir de la partie de plaque de base (31) vers le bas dans une direction opposée à une face inférieure (51d) de la culasse (51, 52), et une pièce saillante (39) qui est pliée et s'élève vers le haut vers la face inférieure (51d) de la culasse (51, 52) à partir de la partie de plaque de base (31),
**caractérisée en ce qu'**une partie d'extrémité d'embout de la pièce saillante (39) est assemblée par soudage à la culasse (51, 52), et la pièce saillante (39) est coupée et s'élève à partir d'une partie entre une périphérie intérieure et une périphérie extérieure de la partie de plaque de base (31) vers le haut vers la face inférieure (51d) de la culasse (51, 52).

2. Soupape entraînée par moteur selon la revendication 1, dans laquelle l'élément d'arrêt de rotation (30) est incorporé dans la résine de moulage de telle sorte que la pièce de prise (37) fait partiellement ou entièrement saillie à partir de la résine de moulage.

3. Soupape entraînée par moteur selon la revendication 1 ou 2, dans laquelle la pièce de prise (37) est agencée dans une partie de plaque de prise (35) qui est pliée à partir d'un côté de périphérie intérieure de la partie de plaque de base (31) dans la direction opposée à la face inférieure (51d) de la culasse (51, 52).

4. Soupape entraînée par moteur selon l'une quelconque des revendications 1 à 3, comportant trois pièces de prise ou plus agencées à un intervalle équiangulaire dans une direction circonférentielle et trois pièces saillantes ou plus agencées de façon analogue.

5. Soupape entraînée par moteur selon l'une quelconque des revendications 1 à 4, dans laquelle une résine d'uréthane, une résine de silicone ou une résine époxyde est utilisée comme résine de moulage.

6. Soupape entraînée par moteur selon l'une quelconque des revendications 1 à 5, dans laquelle l'élément d'arrêt de rotation (30) est constitué d'une plaque métallique conductrice.
